# EUROPÄISCHE PATENTANMELDUNG

(11) **EP 4 834 967 A2**
(43) Veröffentlichungstag der Anmeldung: **04.11.2026**
(21) Anmeldenummer: 26198040.3
(22) Anmeldetag: 23.11.2020
(51) Int. Cl.: C08G 18/76

(54) **SCHÜTTGUT ENTHALTEND FESTE DIISOCYANATE UND DARAUS ERHÄLTLICHE URETHANGRUPPEN-ENTHALTENDE PREPOLYMERE**

(30) Priorität: 28.11.2019 EP 19212203
(62) Dokumentnummer(n) der früheren Anmeldung(en) nach Art. 76 EPÜ: 20209348.0 / 3 828 214
(71) Anmelder: Covestro Deutschland AG, 51373 Leverkusen (DE)
(72) Erfinder: Merkel, Michael, 40223 Dusseldorf (DE); Zorn, Anna-Marie, 76275 Ettlingen (DE); Bellinghausen, Rainer, 51519 Odenthal (DE); Scherpian, Pascal, 47447 Nordrhein-Westfalen - Moers (DE); Weber, Ralph, 42799 Leichlingen (DE)
(74) Vertreter: Levpat

(57) **Zusammenfassung**

Die vorliegende Erfindung betrifft ein Schüttgut enthaltend festes Diisocyanat, insbesondere 1,5-Naphthalindiisocyanat oder p-Phenylendiisocyanat, ein Verfahren zu dessen Herstellung, sowie ein Verfahren zur Herstellung von Isocyanat-Prepolymeren unter Verwendung des erfindungsgemäßen Schüttguts, die Isocyanat-Prepolymere selbst und deren Verwendung zur Herstellung von Polyurethan-Elastomeren, insbesondere Polyurethan-Gießelastomeren.

## Beschreibung

Die vorliegende Erfindung betrifft ein Schüttgut enthaltend festes Diisocyanat, insbesondere 1,5-Naphthalindiisocyanat oder p-Phenylendiisocyanat, ein Verfahren zu dessen Herstellung, sowie ein Verfahren zur Herstellung von Isocyanat-Prepolymeren unter Verwendung des erfindungsgemäßen Schüttguts, die Isocyanat-Prepolymere selbst und deren Verwendung zur Herstellung von Polyurethan-Elastomeren, insbesondere Polyurethan-Gießelastomeren.

Polyurethan-Gießelastomere werden zumeist zur Herstellung von zelligen oder massiven Formteilen verwendet. Ihre Herstellung erfolgt üblicherweise durch Umsetzung einer Isocyanat-Komponente mit einer Komponente, die gegenüber Isocyanatgruppen reaktive Wasserstoffatome enthält. Bei der letztgenannten Komponente handelt es sich zumeist um mehrfunktionelle Alkohole, Amine und/oder Wasser.

Für die Herstellung von Polyurethan-Gießelastomeren bieten sich grundsätzlich zwei Verfahren an, die sich durch die Reihenfolge der Zugabe der Reaktionspartner unterscheiden. Beim sogenannten One-Shot-Verfahren werden die Komponenten nach gravimetrischer oder volumetrischer Dosierung alle gleichzeitig vermischt und unter Formgebung zur Reaktion gebracht. Nachteilig ist hierbei, dass insbesondere bei Verwendung hochschmelzender Isocyanate nur minderwertige Elastomere erhalten werden, da Zwischenprodukte aus kurzkettigem Polyol (Kettenverlängerer) und Isocyanat teilweise aus der Reaktionsschmelze ausfallen und so einer weiteren Umsetzung entzogen werden, wodurch der weitere geordnete Molekulargewichtsaufbau gestört wird. Ein weiterer Nachteil des One-Shot-Verfahrens ist die schnell freiwerdende hohe Reaktionswärme, die häufig nur unzureichend abgeführt werden kann. Die hierdurch entstehenden hohen Temperaturen begünstigen Nebenreaktionen wie die Isocyanurat-Bildung oder die Carbodiimidisierung, wodurch die Elastomereigenschaften weiter beeinträchtigt werden.

Aus diesen Gründen hat sich weitgehend das Prepolymer-Verfahren zur Herstellung von Gießelastomeren durchgesetzt, bei dem zunächst eine langekettige Diolkomponente mit überschüssigem Diisocyanat zu einem flüssigen NCO-Prepolymer umgesetzt wird, dass dann nachfolgend mit einem kurzkettigen Diol wie z.B. 1,4-Butandiol oder Aminen wie Methylen-bis(o-chloro-anilin) (MOCA) oder Diethyl-toluoldiamin (DETDA) und/oder Wasser umgesetzt wird. Dies hat den Vorteil, dass ein Teil der Reaktionswärme schon vorab bei der Prepolymerisierung freigesetzt und abgeführt wird und die Reaktion beim eigentlichen Polymeraufbau einfacher zu kontrollieren ist. Dies begünstigt einen regelmäßigeren Molgewichtsaufbau und ermöglicht längere Gießzeiten, was die blasenfreie Befüllung auch von komplexen Formen erleichtert.

Als langekettige Diolkomponente werden Polyether-Polyole, Polycarbonat-Polyole und bevorzugt Polyester-Polyole, besonders bevorzugt Poly-ε-caprolacton-Polyole eingesetzt. Als Isocyanat-Komponente für besonders hochwertige Gießelastomere werden hochschmelzende Diisocyanate wie p-Phenylendiisocyanat (PPDI), 3,3-Dimethyl-4,4'-biphenyldiisocyanat (TODI) und insbesondere 1,5-Naphthalindiisocyanat (NDI) verwendet.

Für diese hochwertigen Gießelastomere ist die Anwendung des Prepolymer-Verfahrens nicht unproblematisch, da die zunächst hergestellten Prepolymere mit geeigneten NCO-Gehalten noch immer gewisse Mengen an freiem, also monomerem Diisocyanat enthalten, welches dann bei niedrigen Lagertemperaturen zur Kristallisation neigt, während eine Lagerung bei hohen Temperaturen zu unerwünschten Reaktionen und damit einhergehend zu einem Viskositätsanstieg führt.

In EP1918315A1 wird ein Verfahren zur Herstellung von NDI-Prepolymeren beschrieben, bei dem das Polyol bei einer Temperatur zwischen 80 und 240 °C mit festem NDI vermischt wird. Die Temperatur ist dabei so gewählt, dass das feste Isocyanat im Laufe der exothermen Reaktion aufgeschmolzen wird. Nach dem Erhalt einer klaren, homogenen Schmelze wird das entstandene Prepolymer rasch abgekühlt.

In WO02081537A1 wird ein Verfahren zur Herstellung von NDI-Prepolymeren beschrieben, bei dem Polyol bei 140 °C vorgelegt und dann unter intensivem Rühren mit festem NDI versetzt und zur Reaktion gebracht wird.

DE10060473A1 beschreibt die Herstellung von Prepolymeren auf Basis von 1,4-Naphthalindiisocyanat bzw. als Vergleich 1,5 Napthalindiisocyanat. Es wird ein Polyol vorgelegt und bei 120 °C und 20 mbar entwässert, bevor unter Rühren das entsprechende Diisocyanat zugegeben wird. Das Reaktionsgemisch wird dann 15 Minuten bei 20 mbar und 125-130 °C gerührt.

WO2015185659A1 beschreibt ein kontinuierliches Verfahren zur Herstellung von NDI-Prepolymeren, bei dem eine Schmelze des Diisocyanats und ein Polyol bei 80 bis 175 °C in einem Rohrreaktor zur Reaktion gebracht werden. In dieser Anmeldung, wie auch in der EP1918315A1, wird auch auf die verfahrenstechnischen Probleme bei der Dosierung von Diisocyanaten eingegangen. Für eine kontrollierte Reaktion mit gleichmäßigem Molekulargewichtsaufbau muss demnach zunächst geheizt werden, um das schnelle Schmelzen des NDI zu ermöglichen und dann, nach Erreichen des Klarpunkts, schnell gekühlt werden, um die Reaktionstemperatur im Verlauf der exothermen Reaktion nicht deutlich über 127 °C ansteigen zu lassen. Wenngleich sich durch das kontinuierliche Verfahren einige Probleme der Batch-Verfahren vermeiden lassen, ist es letztlich unflexibler und hat sich aufgrund des intrinsisch höheren verfahrenstechnischen Aufwands bisher nicht durchgesetzt.

Bei den beschriebenen inversen Prepolymer-Verfahren in Batch-Fahrweise, also solchen, bei denen zunächst die Polyol-Komponente vorgelegt wird und dann das Isocyanat zugegeben wird, durchläuft der Reaktor mit jedem Batch einen Wechsel von OH- zu NCO-funktionellem Inhalt. Dies bedingt eine stärkere Schwankungsanfälligkeit des Prozesses im Vergleich zu regulären Prepolymer-Verfahren, bei denen dieser Wechsel nicht stattfindet. In solchen regulären Prepolymer-Verfahren kann beispielsweise durch eine langsame Dosierung des unterschüssigen Reaktanden dafür gesorgt werden, dass diesem stets ein großer Überschuss des überschüssigen Reaktanden zur Reaktion angeboten wird und sich auf diese Weise eine sehr einheitliche Reaktion ergibt. Diese Möglichkeit der Reaktionskontrolle entfällt im inversen Prepolymer-Verfahren, bei dem zwangsläufig wechselnde Überschüsse vorliegen. Um das Problem zu minimieren, muss der Wechsel vom OHdominierten Regime in das NCO-dominierte Regime möglichst schnell vollzogen werden, das heißt dass die Überschusskomponente, in diesem Fall also das Isocyanat, möglichst rasch der Reaktion zur Verfügung gestellt werden muss. Dennoch hat sich, wie aus dem Stand der Technik ersichtlich, das inverse Perpolymer-Verfahren als Zwischenschritt in der Herstellung hochwertiger Gießelastomere etabliert. Dies liegt nicht zuletzt an der Verwendung fester Isocyanate. Würde im regulären Prepolymerverfahren gearbeitet, müssten diese vorgelegt und zunächst bei hoher Temperatur aufgeschmolzen werden, wobei bereits unerwünschte Nebenreaktionen des Isocyanats ablaufen würden.

Als ein einfaches Maß dafür, in welchem Umfang bei der Prepolymer-Bildung Nebenreaktionen abgelaufen sind, kann der NCO-Gehalt des Prepolymers herangezogen werden, also die Masse der Isocyanatgruppen bezogen auf die Gesamtmasse des Prepolymers in Prozent. Aus der Stöchiometrie der Hauptreaktion der beiden Komponenten, kann ein theoretischer Wert für den NCO-Gehalt des Prepolymers ermittelt werden, wobei davon ausgegangen wird, dass die im Unterschuss vorliegende, gegenüber NCO-Gruppen reaktive Komponente vollständig umgesetzt wird. Je weiter sich der NCO-Gehalt des Prepolymers von diesem theoretischen Wert entfernt, je niedriger er also liegt, desto häufiger waren NCO-Gruppen an anderen Reaktionen beteiligt, wie beispielswiese der Reaktion mit Urethan-Gruppen zum Allophanat, der Reaktion mit anderen Isocyanat-Gruppen unter Ausbildung von Uretdionen, Isocyanuraten, oder 1-Nylon oder der Reaktion mit Harnstoff-Gruppen unter Ausbildung von Biureten.

Aufgabe der vorliegenden Erfindung war es, auf einfache und kostengünstige Weise und unter geringer Nebenproduktbildung, Prepolymere aus festen Diisocyanaten herzustellen.

Überraschend wurde nun gefunden, dass man NCO-Prepolymere auf Basis von festen Diisocyanaten einfach und kostengünstig in guter Qualität und mit weniger Nebenprodukten herstellen kann, indem man als Diisocyanatkomponente ein Schüttgut verwendet, welches im Wesentlichen aus Partikeln eines festen Diisocyanats besteht, die eine Partikelgröße zwischen 0,1 mm und 4 mm aufweisen.

Gegenstand der vorliegenden Erfindung ist ein Schüttgut enthaltend ein oder bestehend aus einem bei Raumtemperatur (25°C) festen Diisocyanat, dadurch gekennzeichnet, dass bei einer Siebanalyse des Schüttguts in bekannter Weise mit einer Doppelsiebanordnung mit den Maschenweiten 0,1 mm und 4 mm mindestens 90 Gew.-%, bevorzugt mindestens 95 Gew.-% des Schüttguts in der Fraktion zwischen 0,1 mm und 4 mm anfallen.

Die Siebanalyse wird in Anlehnung an die ASTM 1921-89 durchgeführt, wobei die Siebzeit gegenüber der Norm auf 5 min reduziert wird.

Partikel aus dieser Siebfraktion eignen sich in besonderer Weise für die Herstellung von Prepolymeren nach dem industriell etablierten, inversen Batch-Verfahren. Wie vorhergehend beschrieben, wird beim inversen Batch-Verfahren der Äquivalenzpunkt durchschritten und es ist bekannt, dass dieser möglichst schnell durchschritten werden muss, um den Aufbau langer Polymerketten und eine dadurch erhöhte Viskosität bis hin zum Gelieren zu vermeiden. Eine rasche Zugabe des Isocyanats allein reicht hierfür jedoch nicht aus. Es muss vielmehr auch dafür Sorge getragen werden, dass die Isocyanat-Gruppen durch Schmelz-, Löse- und Mischvorgänge auch wirklich den Reaktionspartnern zur Verfügung stehen. Im Inneren größerer Partikel kann es in Abwesenheit des gewünschten Reaktionspartners beim Ansteigen der Temperatur bereits zu Nebenreaktionen der Isocyanat-Gruppen untereinander kommen. Die obere Größenbegrenzung der Partikel im erfindungsgemäßen Schüttgut führt hingegen zu einem schnellen Aufschmelzen und Vermischen des Isocyanats in der Reaktionsmischung und damit zu einem schnellen Erreichen des Klarpunkts und einem gleichmäßigen Molekulargewichtsaufbau. Die untere Größenbegrenzung dient der weitgehenden Vermeidung von Stäuben, die einerseits aus Gründen der Arbeitshygiene unerwünscht sind und andererseits auch technische Probleme begünstigen. Die große Oberfläche der Staubpartikel begünstigt wiederum Nebenreaktionen. Es kann beispielsweise zur Reaktion der meist hygroskopischen Isocyanate mit Luftfeuchtigkeit kommen, wobei sich schwer lösliche Harnstoffe bilden. Ein vollständiger Ausschluss von Luft und damit Luftfeuchtigkeit ist im technischen Maßstab und angesichts des Feststoffhandlings kaum darstellbar. Nicht zuletzt, lassen sich Staubanteile teilweise nur schwer vollständig in die Reaktionsmischung eindispergieren, sondern haften vielmehr an Oberflächen oder verbleiben eine Zeit lang als Schwebstoffe im Gasraum oberhalb des Flüssigkeitsspiegels. Dies beeinflusst die Stöchiometrie der Reaktion und begünstigt ebenfalls unerwünschte Nebenreaktionen.

Das Schüttgut ist bevorzugt rieselfähig. Darunter ist ein Schüttgut zu verstehen, das einen Böschungswinkel ≤55°, vorzugsweise ≤50°, gemessen mit einem Granu Heap (Firma Granutools) aufweist. Bedingt wird die hohe Rieselfähigkeit des erfindungsgemäßen Schüttguts im Wesentlichen durch die beanspruchte Partikelgröße bzw. Partikelgrößenverteilung. Vorzugsweise enthält das Schüttgut höchstens 5 Gew.-%, bevorzugt höchstens 3 Gew.-% und besonders bevorzugt höchstens 2 Gew.-% an Partikeln, die in der Siebanalyse in der Fraktion <0,1 mm anfallen. Ein solches Schüttgut ermöglicht aufgrund seiner guten Rieselfähigkeit eine optimale Entleerung von Transportgebinden sowie eine einfache pneumatische Förderung des Schüttguts.

Vorzugsweise handelt es sich bei dem erfindungsgemäßen Schüttgut um ein Schüttgut enthaltend ein oder bestehend aus einem bei Raumtemperatur festen Diisocyanat, dadurch gekennzeichnet, dass bei einer Siebanalyse des Schüttguts in bekannter Weise mit einer Doppelsiebanordnung mit den Maschenweiten 0,2 mm und 3 mm mindestens 90 Gew.-%, bevorzugt mindestens 95 Gew.-% des Schüttguts in der Fraktion zwischen 0,2 mm und 3 mm anfallen. Unter dem Begriff Unterkorn sind solche Partikel zu verstehen, kleiner sind als in der Untergrenze der entsprechenden Fraktion angegeben. Sie sind also so geformt, dass sie in einer Siebanalyse durch das feinere Sieb fallen bzw. fallen könnten. Entsprechend sind unter dem Begriff Oberkorn solche Partikel zu verstehen, die größer sind als in der Obergrenze der entsprechenden Fraktion angegeben. Sie verbleiben also in einer Siebanalyse auf dem gröberen, oberen Sieb.

Fallen 90 Gew.-% des Schüttguts bei Analyse mit Maschenweiten 0,1 und 4 mm in der Fraktion zwischen 0,1 und 4 mm an bzw. bei Analyse mit den Maschenweiten 0,2 und 3 mm in der Fraktion zwischen 0,2 und 3 mm an, so enthält das Schüttgut bevorzugt höchstens 5 Gew.-% Oberkorn und höchstens 5 Gew.-% Unterkorn.

In einer weiteren bevorzugten Ausführungsform enthält das Schüttgut ≥ 98 Gew.-%, bevorzugt ≥ 99 Gew.-% und besonders bevorzugt ≥ 99,5 Gew.-% des festen Diisocyanats bezogen auf die Gesamtmasse des Schüttguts. Weitere Bestandteile können beispielsweise Nebenprodukte aus der Herstellung des Diisocyanats sein, insbesondere Monoisocyanate, Lösungsmittelreste oder chlorierte Nebenprodukte.

Als festes Diisocyanat eignen sich solche Diisocyanate, die bei Raumtemperatur fest sind, also einen Schmelzpunkt oberhalb von 25 °C aufweisen. Dies sind beispielsweise 2,2-Methylendiisocyanat, 2,4-Methylendiisocyanat, 4,4-Methylendiisocyanat, 1,4-Naphthalindiisocyanat, 1,5-Naphthalindiisocyanat, 1,8-Naphthalindiisocyanat, 1,3-Phenylendiisocyanat, 1,4-Phenylendiisocyanat, isomere des 2,3-Tetralindiisocyanat, 2,4-Tetralindiisocyanat, 2,5-Tetralindiisocyanat, 3,4-Tetralindiisocyanat, o-Tolidindiisocyanat, Duroldiisocyanat, Benzidindiisocyanat und/oder 1,4-Anthrylendiisocyanat. Besonders bevorzugt sind solche Diisocyanate, die einen Schmelzpunkt ≥ 80 °C aufweisen. Ganz besonders bevorzug handelt es sich um 1,5-Naphthalindiisocyanat oder 1,4-Phenylendiisocyanat.

Ein weiterer Gegenstand der Erfindung ist ein Verfahren zur Herstellung des erfindungsgemäßen Schüttguts. Hierzu wird zunächst das Diisocyanat in bekannter Weise durch Phosgenierung des korrespondierenden Amins hergestellt. Denkbar sind auch phosgenfreie Verfahren wie beispielsweise die thermische Urethanspaltung, diese haben sich aber für die Herstellung fester Diisocyanate im industriellen Maßstab aus verschiedenen Gründen nicht durchgesetzt. Für hochschmelzende Diisocyanate wie beispielsweise 1,5-Naphthalindiisocyanat oder 1,4-Phenylendiisocyanat bietet sich eine Suspensionsphosgenierung wie in WO2014044699 beschrieben an. Um das Diisocyanat von Lösungsmittel zu trennen und zur weiteren Reinigung bieten sich die dem Fachmann bekannten Methoden wie beispielsweise Kristallisation, Sublimation oder Destillation gegebenenfalls unter Zugabe von beispielsweise Impfkristallen oder Schleppmitteln. Vorliegend sind unter dem Begriff Kristallisation auch einfache Erstarrungsvorgänge zu verstehen. Es ist also nicht zwingend erforderlich, kristallines Material zu erhalten, auch beispielsweise das Ausfällen amorpher Feststoffe genügt den Anforderungen.

In einer ersten Ausführungsform umfasst das Verfahren zur Herstellung des erfindungsgemäßen Schüttguts einen Kristallisationsvorgang (i) sowie mindestens einen Schritt (ii) ausgewählt aus der Gruppe bestehend aus Klassierung, Agglomeration und Zerkleinerung. Bevorzugt ist der Schritt (ii) eine Agglomeration und/oder eine Zerkleinerung, besonders bevorzugt ist der Schritt (ii) eine Zerkleinerung.

In einer bevorzugten Ausführungsform des Verfahrens erfolgt der Kristallisationsvorgang (i) indem eine Schmelze des festen Diisocyanats auf einer gekühlten Oberfläche, bevorzugt einem Kälteband oder einer rotierenden Schuppenwalze, besonders bevorzugt an einer von innen gekühlten, rotierenden Schuppenwalze, kristallisiert und nach dem Erstarren von dieser abgeschabt wird.

Die Schichtdicke des kristallisierten, festen Diisocyanats auf der gekühlten Oberfläche lässt sich dabei über die Betriebsparameter während des Kristallisationsvorgangs, insbesondere über die Temperaturen der Schmelze und der gekühlten Oberfläche sowie die Vorschubgeschwindigkeit der gekühlten Oberfläche einstellen. Vorzugsweise liegt die Schichtdicke im Bereich von ≥ 0,1 mm und ≤ 4,0 mm, besonders bevorzugt im Bereich von Bereich von ≥ 0,2 mm und ≤ 3,0 mm, und ganz besonders bevorzugt im Bereich von ≥ 0,5 mm und ≤ 2,5 mm. Auf diese Weise werden später Partikel erhalten, die bereits in einer Dimension eine vorteilhafte Ausdehnung aufweisen, was sich einerseits positiv auf das Schmelzverhalten des fertigen Schüttguts auswirkt und andererseits auch die weitere Verarbeitung zum erfindungsgemäßen Schüttgut vereinfacht.

Bevorzugt wird das kristallisierte Diisocyanat mit einem Schabmesser von der gekühlten Oberfläche abgenommen. Auch hier kann über die Positionierung und die Form des Messers bereits Einfluss auf die Gestalt der Partikel genommen werden.

Im Kristallisationsvorgang (i) fällt nur ein Teil der Partikel bereits in der Form und Größe an, die für das erfindungsgemäße Schüttgut erforderlich ist. Deshalb ist im erfindungsgemäßen Verfahren mindestens ein weiterer Schritt erforderlich, der aus der Gruppe, bestehend aus Klassierung, Agglomeration oder Zerkleinerung, ausgewählt ist.

In der Ausführungsform des erfindungsgemäßen Verfahrens bei der als Schritt (ii) eine Klassierung ausgewählt wird, erfolgt diese vorzugsweise nach einem trockenen Verfahren, also entweder mittels Sieben oder mittels Windsichten wobei ein Gas, bevorzugt Stickstoff oder Luft, besonders bevorzugt Stickstoff als Trennmedium verwendet wird. Bevorzugt ist die Klassierung mittels Sieben. Dabei werden die Partikel in an sich bekannter Weise über Siebe in verschiedene Fraktionen getrennt, so dass anschließend die Fraktion oder Fraktionen ausgewählt werden können, die das erfindungsgemäße Schüttgut ergeben. In Siebverfahren lässt sich nicht ausschließen, dass ein gewisser Anteil der Partikel ein hohes Aspektverhältnis aufweist und deshalb in zumindest einer Dimension größer ist als die Maschenweite des jeweils verwendeten Siebs. Dies ist für das erfindungsgemäße Schüttgut unerheblich, da solche Partikel das Schmelz- und Mischverhalten im inversen Prepolymer-Verfahren nur unwesentlich beeinträchtigen. Zu große oder zu kleine Partikel, also solche, die nicht in die Siebfraktion gemäß Anspruch 1 fallen, können in den Prozess zurückgeführt und erneut kristallisiert werden. Alternativ oder zusätzlich können zu große Partikel in einer Zerkleinerungsvorrichtung zerkleinert werden.

In der Ausführungsform des erfindungsgemäßen Verfahrens, bei der als Schritt (ii) eine Agglomeration ausgewählt wird, erfolgt diese vorzugsweise trocken durch Sintern oder Formpressen. Diese Ausführungsform ist besonders dann vorteilhaft, wenn ein großer Teil der Primärpartikel, also Partikel, die nach dem Kristallisationsvorgang erhalten werden, eine zu kleine Partikelgröße aufweisen um in der erfindungsgemäßen Schüttung verwendet zu werden. Alternativ ist diese Ausführungsform auch Vorteilhaft in Kombination mit einem Sieb- oder Zerkleinerungsschritt, bei dem gezielt kleine Partikel erhalten werden, die dann wieder auf die gewünschte Größe agglomeriert werden. Auf diese Weise lassen sich sehr definierte Schüttgüter herstellen. Bevorzugt ist das Formpressen, beispielsweise die Pelletierung oder Tablettierung, welches sehr einheitliche Partikel und daraus resultierend eine gute Rieselfähigkeit des daraus bestehenden Schüttguts ergibt.

In der bevorzugten Ausführungsform des erfindungsgemäßen Verfahrens, bei der als Schritt (ii) eine Zerkleinerung ausgewählt wird, erfolgt diese in einer Zerkleinerungsvorrichtung. Bevorzugt sind hierfür solche Zerkleinerungseinrichtungen aus dem Stand der Technik geeignet, die für den Trockenbetrieb ausgelegt sind. Es können beispielsweise Zerkleinerungseinrichtungen eingesetzt werden, die aus zwei oder mehr rotierenden Walzen bestehen, die miteinander einen Walzenspalt ausbilden, in dem die aufgegebenen Partikel zerkleinert werden. Auch sogenannte Schraubenwalzen-Zerkleinerer können eingesetzt werden, bei denen die Partikel mittels gegenläufig rotierender Schnecken zerkleinert werden. Das ausgetragene, zerkleinerte Schüttgut kann bei Bedarf zumindest teilweise erneut in eine Zerkleinerungsvorrichtung, gegebenenfalls mit geringeren Mahlspalten, gegeben werden, um die gewünschte Korngröße zu erreichen.

Bevorzugte Zerkleinerungsvorrichtungen sind Hammer- oder Messermühlen. Gängige Messermühlen weisen einen meist Zylindrischen Mahlraum auf. In diesen ragen von außen Statormesser hinein, während sich in seinem inneren eine Rotorwalze dreht, die mit nach außen gerichteten Schneidmessern bestückt ist. Bevorzugt ist im Umfang des Mahlraumes ein Sieb, vorzugsweise ein Lochsieb, angeordnet, durch das die zerkleinerten Partikel den Mahlraum verlassen, während zu große Partikel zurückgehalten und weiter zerkleinert werden. Das zu zerkleinernde Gut kann dabei axial oder auch radial in den Mahlraum eingebracht werden. Besonders bevorzugt werden als Zerkleinerungseinrichtung Hammermühlen eingesetzt. Dabei rotiert ein Rotor in einer Mahlkammer, wobei der Rotor mit beweglichen oder feststehenden Hämmern bestückt ist. Durch den Aufprall der Hämmer auf die Stücke des Mahlguts werden diese zerkleinert und gegen die Mahlwand geschleudert, wo eine weitere Zerkleinerung stattfindet. Wie schon bei den Messermühlen beschrieben, ist auch hier im Umfang des Mahlraums ein Sieb, vorzugsweise ein Lochsieb, angeordnet, durch das Partikel, die eine maximale Korngröße unterschreiten den Mahlraum verlassen können. Da dieser Zerkleinerungsschritt nur eine Oberkornbegrenzung beinhaltet, schließt sich bei Bedarf noch eine Entstaubung durch Windsichten oder Sieben des Schüttguts an.

In einer weiteren bevorzugten Ausführungsform des Verfahrens wird aus dem in Schritt (ii) erhaltenen Schüttgut gegebenenfalls vorhandenes Ober- bzw. Unterkorn in einem Schritt (iii) durch Klassierung zumindest teilweise abgetrennt, wobei die Klassierung bevorzugt durch Siebung oder Windsichtung, besonders bevorzugt durch Siebung erfolgt und zu große und/oder zu kleine Partikel zumindest teilweise in den Prozess zurückgeführt, d.h. aufgeschmolzen oder gelöst und erneut dem Kristallisationsvorgang (i) unterzogen werden. Sofern Schritt (ii) eine Zerkleinerung umfasst, können zu große Partikel alternativ in die Zerkleinerungsvorrichtung zurückgeführt werden.

Ein weiterer Gegenstand ist die Verwendung eines Schüttguts gemäß der vorangegangenen Beschreibung bei der Herstellung von NCO-terminierten Prepolymeren.

Ein weiterer Gegenstand der Erfindung ist ein Verfahren zur Herstellung von NCO-terminierten Prepolymeren umfassend oder bestehend aus der Umsetzung mindestens einer Komponente (A), enthaltend oder bestehend aus bei Raumtemperatur festem Isocyanat, und mindestens einer Isocyanat-reaktiven Komponente (B), dadurch gekennzeichnet, dass Komponente (A) einem Schüttgut wie zuvor beschrieben entspricht.

Bei der isocyanatreaktiven Komponente (B) handelt es sich bevorzugt um Polyole.

Geeignete Polyole zur Herstellung der Prepolymere weisen beispielsweise ein zahlenmittleres Molekulargewicht Mₙ von 400 bis 8000 g/mol, bevorzugt von 600 bis 6000 g/mol und besonders bevorzugt von 1000 bis 3000 g/mol auf. Ihre Hydroxylzahl beträgt 22 bis 400 mg KOH/g, bevorzugt 30 bis 300 mg KOH/g und besonders bevorzugt 40 bis 250 mg KOH/g und weisen eine OH-Funktionalität von 1,5 bis 6, bevorzugt von 1,7 bis 3 und besonders bevorzugt von 1,9 bis 2,2 auf.

Polyole zur Herstellung der Prepolymere sind die in der Polyurethantechnologie bekannten organischen Polyhydroxylverbindungen, wie beispielsweise die üblichen Polyesterpolyole, Polyacrylatpolyole, Polyurethanpolyole, Polycarbonatpolyole, Polyetherpolyole, Polyesterpolyacrylatpolyole sowie Polyurethanpolyacrylatpolyole, Polyurethanpolyesterpolyole, Polyurethanpolyetherpolyole, Polyurethanpolycarbonatpolyole, Polyesterpolycarbonatpolyole, Phenol/Formaldehydharze, allein oder in Mischungen. Bevorzugt sind Polyesterpolyole, Polyetherpolyole Polyacrylatpolyole oder Polycarbonatpolyole, besonders bevorzugt sind Polyetherpolyole, Polyesterpolyole und Polycarbonatpolyole. Am meisten bevorzugt sind Polyesterpolyole.

Als Polyetherpolyole seien z.B. die Polyadditionsprodukte der Styroloxide, des Ethylenoxids, Propylenoxids, Tetrahydrofurans, Butylenoxids, Epichlorhydrins, sowie ihre Mischadditions- und Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole genannt. Geeignete hydroxyfunktionelle Polyether weisen OH-Funktionalitäten von 1,5 bis 6,0, bevorzugt 1,7 bis 3,0, besonders bevorzugt 1,9 bis 2,2, OH-Zahlen von 22 bis 400, bevorzugt von 30 bis 300, besonders bevorzugt 40 bis 250 mg KOH/g und Molekulargewichte Mₙ von 400 bis 8000, bevorzugt von 600 bis 6000, besonders bevorzugt von 1000 bis 3000 g/mol auf. Es handelt sich z.B. Alkoxylierungsprodukte hydroxyfunktioneller Startermolekuele wie beispielsweise Ethylenglykol, Propylenglykol, Butandiol, Hexandiol, Trimethylolpropan, Glycerin, Pentaerythrit, Sorbit oder Gemische dieser und auch anderer hydroxyfunktioneller Verbindungen mit Ethylenoxid, Propylenoxid oder Butylenoxid.

Gut geeignete Beispiele für Polyesterpolyole sind die bekannten Polykondensate aus Di- sowie gegebenenfalls Tri,- und Tetraolen und Di- sowie gegebenenfalls Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopenthylglykolester, wobei die drei letztgenannten Verbindungen bevorzugt sind. Um eine Funktionalität > 2 zu erzielen, können gegebenenfalls Polyole mit einer Funktionalität von 3 anteilig verwendet werden, beispielsweise Trimethylolpropan, Glycerin, Erythrit, Pentaerythrit, Trimethylolbenzol oder Trishydroxyethylisocyanurat. Als Dicarbonsäuren kommen beispielsweise in Frage Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure, 2,2-Dimethylbernsteinsäure. Anhydride dieser Säuren sind ebenfalls brauchbar, soweit sie existieren. Für die Belange der vorliegenden Erfindung werden die Anhydride infolgedessen durch den Ausdruck "Säure" umfasst. Es können auch Monocarbonsäuren, wie Benzoesäure und Hexancarbonsäure, verwendet werden, vorausgesetzt, dass die mittlere Funktionalität des Polyols ≥2 ist. Gesättigte aliphatische oder aromatische Säuren wie Adipinsäure oder Isophthalsäure sind bevorzugt. Als gegebenenfalls in kleineren Mengen mitzuverwendende Polycarbonsäure sei hier Trimellitsäure genannt. Hydroxycarbonsäuren, die als Reaktionsteilnehmer bei der Herstellung eines Polyesterpolyols mit endständigen Hydroxylgruppen mitverwendet werden können sind beispielsweise Hydroxycapronsäure, Hydroxybuttersäure, Hydroxydecansäure, Hydroxystearinsäure und dergleichen. Brauchbare Lactone sind u.a. ε-Caprolacton, Butyrolacton und Homologe. Bevorzugt sind Polyesterpolyole auf Basis von Butandiol und/oder Neopentylglykol und/oder Hexandiol und/oder Ethylenglykol und/oder Diethylenglykol mit Adipinsäure und/oder Phthalsäure und/oder Isophthalsäure. Besonders bevorzugt sind Polyesterpolyole auf Basis von Butandiol und/oder Neopentylglykol und/oder Hexandiol mit Adipinsäure und/oder Phthalsäure. Ebenfalls besonders bevorzugt sind lineare Polyesterdiole auf Basis von ε-Caprolacton.

Die in Frage kommenden Polycarbonatpolyole sind durch Reaktion von Kohlensäurederivaten, z.B. Diphenylcarbonat, Dimethylcarbonat oder Phosgen mit Diolen erhältlich. Als derartige Diole kommen z.B. Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutlyenglykol, Polybutylenglykole, Bisphenol A, Tetrabrombisphenol A, aber auch Lacton modifizierte Diole in Frage.

Bevorzugt enthält die Diolkomponente 40 bis 100 Gew.-% 1,6-Hexandiol und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol ε-Caprolacton oder durch Veretherung von Hexandiol mit sich selbst zum Di- oder Trihexylenglykol erhalten werden. Auch Polyether-Polycarbonatpolyole können eingesetzt werden. Bevorzugt sind Polycarbonatpolyole auf Basis von Dimethylcarbonat und Hexandiol und/oder Butandiol und/oder ε-Caprolacton. Ganz besonders bevorzugt sind Polycarbonatpolyole auf Basis von Dimethylcarbonat und Hexandiol und/oder ε-Caprolacton.

Geeignete Polyacrylatpolyole werden beispielsweise durch radikalische Polymerisation von Hydroxylgruppen aufweisenden, olefinisch ungesättigten Monomeren oder durch radikalische Copolymiersation von Hydroxylgruppen aufweisenden, olefinisch ungesättigten Monomeren mit gegebenenfalls anderen olefinisch ungesättigten Monomeren, wie z.B. Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril erhalten. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropylmethacrylat-Isomerengemisch. Geeignete Radikalinitiatoren sind die aus der Gruppe der Azoverbindungen, wie zum Beispiel Azobis(isobutyronitril), oder aus der Gruppe der Peroxide, wie beispielsweise Di-tert.-butylperoxid.

Die genannten Polyole können alleine oder in Mischung verwendet werden.

Die vorstehend erwähnten isocyanatreaktiven Verbindungen der Komponente (B) werden mit dem/den Isocyanat/en der Komponente (A) zu Urethangruppen enthaltenden NCO-terminierten Prepolymeren umgesetzt, wobei die Isocyanatgruppen gegenüber den isocyanatreaktiven Gruppen im Überschuss eingesetzt werden. Dabei wird das Mengenverhältnis so bemessen, dass die Isocyanat-Komponente in einem solchen Überschuss vorliegt, dass der berechnete (theoretische) NCO-Gehalt vorzugsweise im Bereich von 2,5 bis 6,0 %, bevorzugt 3,0 bis 5,0 % liegt.

Bei der Prepolymerherstellung können Additive mitverwendet werden. Geeignete Additive sind Katalysatoren, Emulgatoren, UV- und Hydrolyseschutzmittel sowie bevorzugt Stabilisatoren, die üblicherweise in der Polyurethanchemie verwendet werden. Eine Übersicht findet sich z.B. in "Kunststoff Handbuch Bd. 7, Hrsg. G. Oertel, 1983, Carl Hanser Verlag, München, Wien".

Beispiele für Katalysatoren sind Trialkylamine, Diazabicyclooctan, Dibutylzinndilaurat, *N-*Alkylmorpholine, Blei-, Zink-, Calcium- und Magnesium-octoat sowie die entsprechenden Naphthenate, *p*-Nitrophenolate usw..
Beispiele für geeignete UV- und Hydrolyseschutzmittel sind 2,6-Di*-tert-*butyl-4-methylphenol und Carbodiimide.

Beispiele für geeignete Stabilisatoren sind Brønsted-und Lewis-Säuren, wie etwa Salzsäure, Benzoylchlorid, Dibutylphosphat, Adipinsäure, Äpfelsäure, Bernsteinsäure, Traubensäure, Zitronensäure usw., weiterhin Alkyl- und Arylsulfonsäuren wie *p*-Toluolsulfonsäure und bevorzugt Dodecylbenzolsulfonsäure.

Bevorzugt handelt es sich bei dem Verfahren um ein inverses Prepolymer-Verfahren, bei dem -wie bereits zuvor beschrieben- die isocyanatreaktive Komponente (B) vorgelegt wird und die Isocyanatkomponente (A) zudosiert wird. Dabei wird die isocyanatreaktive Komponente (B) in flüssiger Form, d.h. in Lösung oder Schmelze, vorgelegt, während Komponente (B) in Form des Schüttguts, also in fester Form, bevorzugt unter Rühren zur Polyolkomponente hinzugegeben und mit dieser vermischt wird. Dabei schmilzt das Schüttgut auf und reagiert mit der Polyolkomponente. Die Reaktionstemperatur liegt dabei vorzugsweise im Bereich von 80 bis 160 °C, besonders bevorzugt im Bereich von 100 bis 150 °C.

Besonders bevorzugt erfolgt die Herstellung der NCO-terminierten Prepolymeren chargenweise in einem inversen Prepolymer-Verfahren.

Die nach dem erfindungsgemäßen Verfahren hergestellten NCO-Prepolymere weisen NCO-Gehalte von 2,5 bis 6,0 %, bevorzugt 3,0 bis 5,0 %, und Viskositäten gemäß DIN EN ISO 3219 von 1.000 bis 12.000 mPas/70°C, bevorzugt 2.000 bis 10.000 mPas/70°C auf und können vorteilhaft zur Herstellung von massiven wie auch zelligen Elastomeren verwendet werden.

### Beispiele

### Rohstoffe:

**CAPA^{TM} 2161A:** Poly-ε-caprolacton-diol von PERSTORP mit einem Molekulargewicht von 1600 Da und einer OH-Funktionalität von 2 (OH-Zahl 70 mg KOH/g).

Der rechnerische NCO-Gehalt der im Folgenden beschriebenen Prepolymere lag jeweils bei 4,07 %.

### Beispiel 1 (nicht erfindungsgemäß, zu kleine Partikel):

Zunächst wurde eine repräsentative Probe eines Schüttguts enthaltend 99,7 Gew.-% 1,5-Napthalindiisocyanat in einer Klassierung mittels Doppelsiebanordnung (Quadratmaschen mit Maschenweiten 4 mm und 0,1 mm) in drei Fraktionen getrennt und deren Gewichtsanteile bestimmt. Die Fraktion zwischen 0,1 mm und 4 mm hatte einen Anteil von 88 Gew.-% an der Gesamtmasse des Schüttguts, die Fraktion oberhalb von 4 mm hatte einen Anteil von 1 Gew.-% und die Fraktion unterhalb von 0,1 mm hatte einen Anteil von 11 Gew.-%

In einem Glaskolben wurden 100 g CAPA^{TM} 2161A unter Stickstoffatmosphäre vorgelegt und mittels Ölbad auf 125 °C erwärmt. Dann wurden unter Rühren 25,94 g des zuvor in der Siebanalyse untersuchten Schüttguts zugegeben. Das Reaktionsgemisch erreichte im Laufe der exothermen Reaktion eine Maximaltemperatur von 135 °C. Nach 30 Minuten wurde die noch immer trübe Mischung rasch abgekühlt. Das erhaltene Prepolymer hatte einen NCO-Gehalt von 3,82 %.

### Beispiel 2 (erfindungsgemäß):

Zunächst wurde eine repräsentative Probe eines Schüttguts enthaltend 99,7 Gew.-% 1,5-Napthalindiisocyanat in einer Klassierung mittels Doppelsiebanordnung (Quadratmaschen mit Maschenweiten 4 mm und 0,1 mm) in drei Fraktionen getrennt und deren Gewichtsanteile bestimmt. Die Fraktion zwischen 0,1 mm und 4 mm hatte einen Anteil von 96,6 Gew.-% an der Gesamtmasse des Schüttguts, die Fraktion oberhalb von 4 mm hatte einen Anteil von 1 Gew.-% und die Fraktion unterhalb von 0,1 mm hatte einen Anteil von 2,4 Gew.-%

In einem Glaskolben wurden 100 g CAPA^{TM} 2161A unter Stickstoffatmosphäre vorgelegt und mittels Ölbad auf 125 °C erwärmt. Dann wurden unter Rühren 25,94 g des zuvor in der Siebanalyse untersuchten Schüttguts zugegeben. Das Reaktionsgemisch erreichte im Laufe der exothermen Reaktion eine Maximaltemperatur von 134 °C und die Reaktionsmischung klarte vollständig auf. Nach 30 Minuten wurde die Lösung rasch abgekühlt. Das erhaltene Prepolymer hatte einen NCO-Gehalt von 3,90 %.

### Beispiel 3 (nicht erfindungsgemäß, 10% zu große Partikel):

Zunächst wurde eine repräsentative Probe eines Schüttguts enthaltend 99,7 Gew.-% 1,5-Napthalindiisocyanat in einer Klassierung mittels Doppelsiebanordnung (Quadratmaschen mit Maschenweiten 4 mm und 0,1 mm) in drei Fraktionen getrennt und deren Gewichtsanteile bestimmt. Die Fraktion zwischen 0,1 mm und 4 mm hatte einen Anteil von 88 Gew.-% an der Gesamtmasse des Schüttguts, die Fraktion oberhalb von 4 mm hatte einen Anteil von 10 Gew.-% und die Fraktion unterhalb von 0,1 mm hatte einen Anteil von 2 Gew.-%

In einem Glaskolben werden 100 g CAPA^{TM} 2161A unter Stickstoffatmosphäre vorgelegt und mittels Ölbad auf 125 °C erwärmt. Dann werden unter Rühren 25,94 g des zuvor in der Siebanalyse untersuchten Schüttguts zugegeben. Das Reaktionsgemisch erreicht im Laufe der exothermen Reaktion eine Maximaltemperatur von 134 °C. Nach 30 Minuten enthielt die Reaktionsmischung noch immer Flocken eines Feststoffs und wurde rasch abgekühlt. Der NCO-Gehalt des Prepolymers betrug 3,79 %.

### Beispiel 4 (erfindungsgemäß):

Aus einem Schüttgut enthaltend 99,7 Gew.-% 1,5-Napthalindiisocyanat wurde in einer Klassierung mittels Doppelsiebanordnung (Quadratmaschen mit Maschenweiten 3 mm und 0,2 mm) die Fraktion zwischen 0,2 mm und 3 mm isoliert, wobei ein Schüttgut erhalten wurde, in dem über 99% der Partikel dieser Fraktion angehöhrten. Dieses wurde zur Herstellung eines Prepolymers wie in Beispiel 2 eingesetzt. Das erhaltene Prepolymer hatte einen NCO-Gehalt von 3,91%.

## Patentansprüche

1. Ein Verfahren zur Herstellung von NCO-terminierten Prepolymeren, umfassend:
- Bereitstellen einer flüssigen isocyanat-reaktiven Komponente (B), enthaltend Polyole, und
- Zugabe eines Schüttguts enthaltend festes Diisocyanat als Komponente (A) zu der flüssigen Komponente (B) unter Rühren,
**dadurch gekennzeichnet, dass** bei einer Siebanalyse des Schüttguts mit einer Doppelsiebanordnung mit den Maschenweiten 0,1 mm und 4 mm mindestens 90 Gew.-% des Schüttguts in der Fraktion zwischen 0,1 mm und 4 mm anfallen, wobei die Siebanalyse gemäß ASTM 1921-89 durchgeführt wird, und
wobei das feste Diisocyanat einen Schmelzpunkt ≥ 80 °C aufweist.

2. Das Verfahren gemäß Anspruch 1, wobei die isocyanat-reaktive Komponente (B) bei einer Temperatur von 80 bis 160 °C vorliegt, wenn das Schüttgut zugegeben wird.

3. Das Verfahren gemäß Anspruch 2, wobei die Temperatur 100 bis 150 °C beträgt.

4. Das Verfahren gemäß einem der Ansprüche 1 bis 3, wobei das feste Diisocyanat 1,5-Naphthalindiisocyanat oder 1,4-Phenylendiisocyanat ist.

5. Das Verfahren gemäß einem der Ansprüche 1 bis 4, wobei die isocyanat-reaktive Komponente (B) Polyesterpolyole, Polyetherpolyole, Polycarbonatpolyole oder Polyacrylatpolyole enthält.

6. Das Verfahren gemäß Anspruch 5, wobei die isocyanat-reaktive Komponente (B) Poly-ε-caprolacton-Polyole enthält.

7. Das Verfahren gemäß einem der Ansprüche 1 bis 6, wobei die isocyanat-reaktive Komponente (B) ein zahlenmittleres Molekulargewicht Mn von 400 bis 8.000 g/mol und eine Hydroxylzahl von 22 bis 400 mg KOH/g aufweist.

8. Das Verfahren gemäß Anspruch 7, wobei das zahlenmittlere Molekulargewicht Mn 1.000 bis 3.000 g/mol beträgt.

9. Das Verfahren gemäß einem der Ansprüche 1 bis 8, wobei bei einer Siebanalyse mindestens 90 Gew.-% des Schüttguts in der Fraktion zwischen 0,2 mm und 3 mm anfallen.

10. Das Verfahren gemäß einem der Ansprüche 1 bis 9, wobei das NCO-terminierte Prepolymer einen NCO-Gehalt von 2,5 bis 6,0 % aufweist.

11. Das Verfahren gemäß einem der Ansprüche 1 bis 10, wobei das Verfahren chargenweise durchgeführt wird.

12. Ein NCO-terminiertes Prepolymer, erhältlich nach einem Verfahren gemäß einem der Ansprüche 1 bis 11.

13. Das NCO-terminierte Prepolymer gemäß Anspruch 12, mit einem NCO-Gehalt von 3,0 bis 5,0 % und einer Viskosität von 1.000 bis 12.000 mPas bei 70 °C.

14. Verwendung eines Schüttguts enthaltend festes Diisocyanat, wobei mindestens 90 Gew.-% der in dem Schüttgut enthaltenen Partikel bei einer Siebanalyse in der Fraktion zwischen 0,1 mm und 4 mm anfallen, und wobei das feste Diisocyanat einen Schmelzpunkt ≥ 80 °C aufweist, zur chargenweisen Herstellung von NCO-terminierten Prepolymeren in einem inversen Prepolymer-Verfahren.

15. Verwendung gemäß Anspruch 14, wobei die NCO-terminierten Prepolymere zur Herstellung von Polyurethan-Gießelastomeren verwendet werden.
